Europäisches Patentamt

(19) **European Patent Office**

**Office européen des brevets**

(11) Veröffentlichungsnummer: **0 009 651**
**A1**

(12) # EUROPÄISCHE PATENTANMELDUNG

(21) Anmeldenummer: **79103311.1**

(22) Anmeldetag: **06.09.79**

(51) Int. Cl.³: **G 01 M 3/16**
**D 06 F 39/08, H 01 H 35/42**

(30) Priorität: **13.09.78 DE 2839768**

(43) Veröffentlichungstag der Anmeldung:
**16.04.80 Patentblatt 80/8**

(84) Benannte Vertragsstaaten:
**AT BE CH DE FR GB IT NL SE**

(71) Anmelder: **Wildt, Hans**
**Radlkoferstrasse 5**
**D-8000 München 70(DE)**

(72) Erfinder: **Wildt, Hans**
**Radlkoferstrasse 5**
**D-8000 München 70(DE)**

(74) Vertreter: **Lehmann, Klaus, Dipl.-Ing.**
**Patentanwälte Schroeter & Lehmann Postfach 70 17 47**
**Lipowskystrasse 10**
**D-8000 München 70(DE)**

(54) **Überwachungsgerät für Flüssigkeiten und Anwendung.**

(57) Ein Überwachungsgerät (10) enthält einen Schalter (33), der selbsttätig in eine für eine Alarmauslösung wirksame Lage überführbar ist, wenn an der zu überwachenden Stelle eine Flüssigkeit auftritt oder einen bestimmten Pegel überschreitet. Derartige Überwachungsgeräte finden im Haushalt, in der Industrie, in Labors, in Lagerräumen usw. dort Verwendung, wo die Gefahr des Austretens oder Überlaufens von Flüssigkeiten aus Behältern oder Rohrleitungen besteht. Gefährdet sind z.B. mit Druckwasserschläuchen angeschlossene Haushaltswaschmaschinen, Öltankräume, Heizungszentralen oder Armaturen an verschiedenen Stellen umfangreicher Anlagen der chemischen Industrie u.ä.

Zwecks Erzielung einer sicheren Langzeitbereitschaft bei einfachstem Aufbau und leichter Installierbarkeit des Überwachungsgerätes, sowie für dessen mögliches Ansprechen selbst auf geringste Flüssigkeitsmengen enthält das Überwachungsgerät (10) ein Zugelement (22), das den Schalter (33) von der Überführung in die zur Alarmauslösung wirksame Lage zurückhält, bei Anwesenheit der betreffenden Flüssigkeit jedoch nachgibt, im einfachsten Fall etwa ein Papierband, dessen Naßfestigkeit merklich unter seiner Trockenfestigkeit liegt.

./...

*Fig.1*

- 1 -
## Überwachungsgerät

Die Erfindung betriff ein Überwachungsgerät mit einem Schalter zur Alarmauslösung bei Anwesenheit einer Flüssigkeit an einer zu überwachenden Stelle.

Derartige Überwachungsgeräte finden im Haushalt, in der Industrie, in Labors, Lagerräumen usw. dort Verwendung, wo die Gefahr des Austretens oder Überlaufens von Flüssigkeiten aus Behältern oder Rohrleitungen besteht. Nur als Beispiel seien erwähnt mit Druckwasserschläuchen angeschlossene Haushaltswaschmaschinen, Öltankräume oder Heizungszentralen, aber auch bestimmte, gefährdete Armaturen, z.B. an verschiedenen Stellen umfangreicher Anlagen der chemischen Industrie. Diese Aufzählung erhebt keinen Anspruch auf Vollständigkeit, weitere Anwendungsfälle liegen auf der Hand.

Bekannte Überwachungsgeräte für diesen Zweck sind kompliziert gebaut, deshalb teuer und störanfällig, trotzdem aber nicht universell anwendbar. Bei einfacheren Geräten besteht die Notwendigkeit, daß sich die ausgetretene Flüssigkeit erst zu einer bestimmten Menge ansammelt, damit eine bestimmte Höhe des Flüssigkeitsspiegels über Grund erreicht wird und das Überwachungsgerät ansprechen kann. Elektronische Einrichtungen sind kompliziert und unterliegen trotzdem, zumindest langfristig, Schwankungen ihrer Ansprechschwelle, so daß auch sie nicht dauerhaft, betriebssicher und wartungsfrei arbeiten. Ferner können die bekannten Überwachungsgeräte meist nicht oder nur unter größerem Aufwand auf die Überwachung anderer Medien umgestellt werden, für die sie ursprünglich nicht vorgesehen waren. Dies setzt allerdings bereits voraus, daß eine spezifische Ansprechempfindlichkeit auf bestimmte Lösungsmittel, Säuren und dgl. gegeben ist, was nur bei sehr aufwendigen Überwachungsgeräten bisher möglich war. Außerdem besteht manchmal das Bedürfnis, Flüssigkeiten in Dampfform nachzuweisen, wie es bei der Überwachung dampfführender Leitungen der Fall ist.

Die Erfindung hat sich die Aufgabe gestellt, die Universalität von Überwachungsgeräten der eingangs genannten Art zu verbessern, d.h. ein Überwachungsgerät zu schaffen, das auf jede Flüssigkeitsspiegelhöhe, also auch auf die nur benetzende Flüssigkeitshöhe, ansprechen kann, das auf bestimmte zu überwachende Flüssigkeiten oder ihre Dämpfe leicht umstellbar ist und das auch über sehr lange Zeiträume keine Veränderung seiner Ansprechschwelle oder sonstigen Zuverlässigkeit zeigt. Das alles soll mit einer äußert einfach gebauten, billig und leicht zu installierenden Ausführung des Überwachungsgeräts erreicht werden.

Die Erfindung löst die gestellte Aufgabe in erster Linie durch die in Anspruch 1 angegebenen Maßnahmen.

Darüberhinaus die Lösung der gestellten Aufgabe fördernde Maßnahmen sind in den Unteransprüchen angegeben.

Weitere Merkmale der Erfindung sowie die dadurch erzielten Vorteile ergeben sich aus der nachfolgenden Beschreibung, in der ein Ausführungsbeispiel der Erfindung und ein mögliches, vorteilhaftes Anwendungsbeispiel anhand der Zeichnungen erläutert sind. Es zeigen

Fig. 1 eine Seitenansicht des der Beschreibung zugrunde liegenden Ausführungsbeispiel der Erfindung, ohne Abdeckhaube,

Fig. 2 eine Draufsicht auf das Überwachungsgerät der Fig. 1,
ebenfalls ohne Abdeckhaube,

Fig. 3 eine vorteilhafte Anwendung des Geräts der Fig. 1.

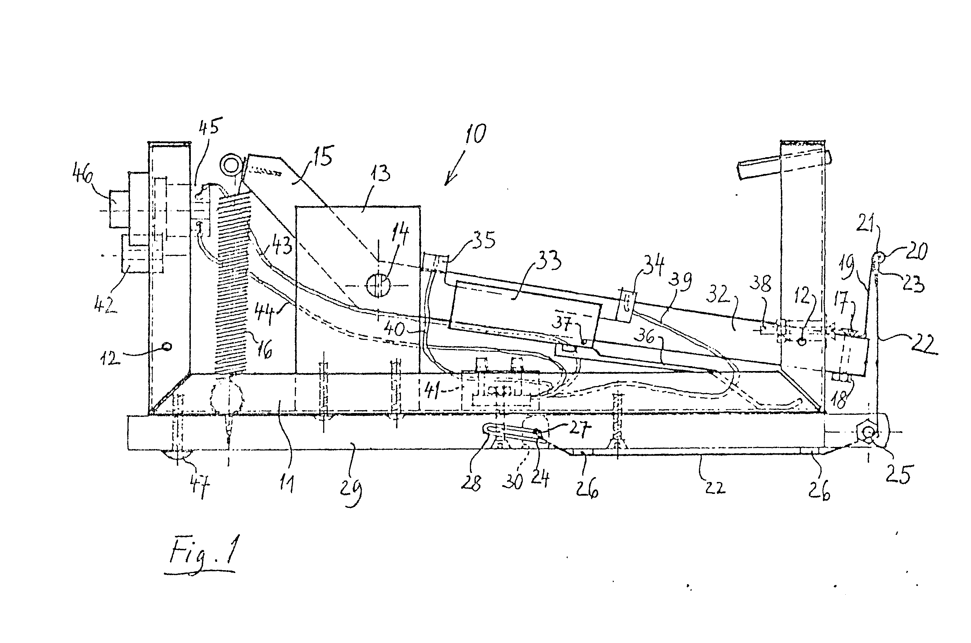

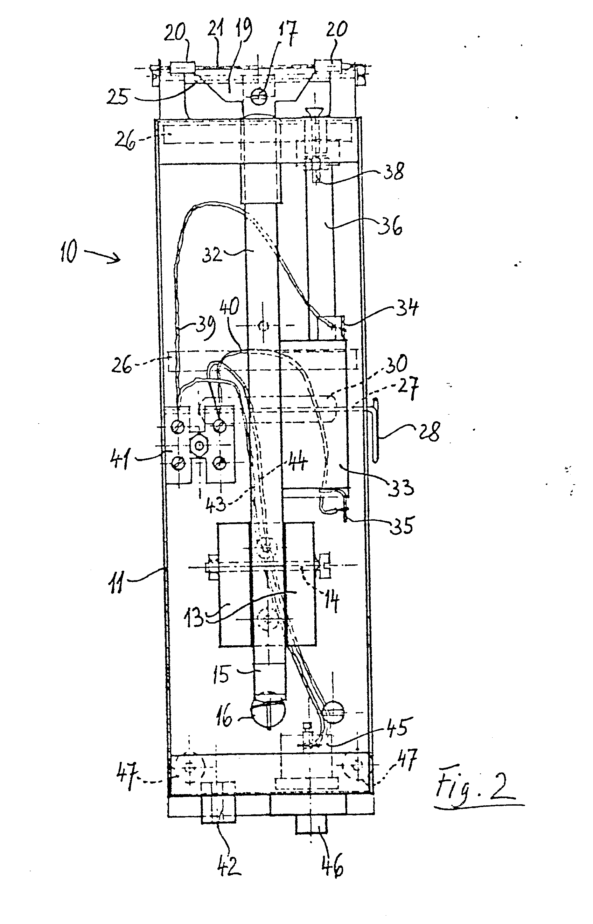

Das Überwachungsgerät 1o hat gemäß den Fig. 1 und 2 einen
Rahmen 11 aus zum Beispiel zu einem U gebogenen Blech, an
dem die übrigen Gerätebestandteile befestigt sind. Eine in
den Zeichnungen nicht mit dargestellte Abdeckhaube ist mittels Schrauben, die in Gewindebohrungen 12 des Rahmens 11
gedreht werden, am Rahmen zu befestigen. Am waagrechten
Bodenteil des Rahmens 11 ist ein Lagerbock 13, z.B. mittels
Schrauben befestigt. Durch den Lagerbock 13 geht eine Achse
14, im dargestellten Beispiel eine Schraube, die durch eine
Mutter am Lagerbock 13 gesichert ist. Um die Achse 14 schwenkbar gelagert ist ein zweiarmiger Hebel 15, der unter der
Wirkung einer Zugfeder 16 steht, die zwischen seinem einen
Ende und dem Rahmen/11 gespannt ist. Die Feder 16 versucht, den
Hebel 15 entgegen dem Uhrzeigersinn der Fig. 1 zu verschwenken.
An dem der Feder/16 entgegengesetzten Ende des Hebels 15 ist mittels einer Schraube 17 mit Mutter 18 ein abgewinkeltes Blechstück 19 befestigt, das gabelförmig ausgestanzt und an den Gabelenden zu je einer Öse 2o eingerollt ist. Durch die beiden
Ösen 2o ist ein Steckstift 21 gesteckt.

Der Steckstift 21 kann aus den Ösen 2o herausgezogen werden,
um das Einspannen eines Zugelements 22 zu ermöglichen. Das
Zugelement 22 kann bandförmig ausgestaltet sein und ist in
diesem Fall entweder ein endloses Band oder mit zwei Endschlaufen 23 und 24 versehen. Zum Einspannen der Endschlaufe 23 wird diese bei herausgezogenem Steckstift 21 zwischen
die beiden Ösen 2o gehalten und der Steckstift 21 durch die
Ösen 2o und die Schlaufe 23 des Zugelements 22 gesteckt.

Das als Zugelement 22 dienende Band ist außerdem über eine Umlenkstelle 25 und zwei Stege 26 geführt. Seine andere Endschlaufe 24 wird von einem weiteren Steckstift 27 gehalten, der ebenfalls mittels eines Griffs 28 erfaßbar ist. Der Steckstift 27 steckt in einer Bohrung einer z.B. aus Plexiglas bestehenden Bodenplatte 29, die unten am waagrechten Bodenteil des Rahmens 11 angebracht ist. Im Bereich der Bohrung für den Steckstift 27 hat die Bodenplatte 29 eine Ausnehmung 3o von der in Fig. 2 gezeigten Umrißform, so daß die Endschlaufe 24 in dieser Ausnehmung 3o durch den Steckstift 27 erfaßbar ist. Die Bodenplatte 29 ist zugleich Träger der z.B. an sie angeklebten Stege 26 und der Umlenkstelle 25, die z.B. als Umlenkrolle zwischen zwei Fortsätzen 31 gehalten ist.

Die Ösen 2o und der Steckstift 21 bilden eine zum Gerät bewegliche Einspannstelle, die Ausnehmung 3o und der Steckstift 27 eine zum Gerät feststehende Einspannstelle für das Zugelement 22. Die Erfindung ist nicht auf die gezeigte Art der Einspannung mittels Steckstiften beschränkt, da diese an sich ohne Einfluß auf die Funktion des Gerätes ist. Jedoch erleichtert die im Beispiel beschriebene Einspannung die Anbringung des bandförmigen Zugelements 22 am Gerät mittels leicht durchzuführender Handgriffe, ohne daß das Band der Gefahr einer offenen oder versteckten Beschädigung ausgesetzt ist, was für die spätere Betriebssicherheit, aber auch für die einfache und problemlose Installation des Geräts von Bedeutung ist. Dem zuletzt genannten Zweck dient auch die beschriebene Führung des Zugelements 22 außerhalb der Gehäuseaußenfläche des Geräts, da zum Auswechseln des Zugelements das Gerät selbst nicht geöffnet werden muß. Das Zugelement 22 hat eine solche Länge, daß es in eingespanntem Zustand den Hebel 15 in der in Fig. 1 gezeigten Lage hält. Umgekehrt ist aufgrund der in Fig. 1 nach unten ziehenden Wirkung der Feder 16 der He- bel 15 bestrebt, das Zugelement 22 mittels des längeren Hebelarms des Hebels 15 nach oben zu ziehen und gespannt zu halten. Der längere Hebelarm des Hebels 15 wird deshalb im folgenden als Spannarm 32 bezeichnet.

Die vom Spannarm 32 auf das Zugelement 22 ausgeübte Kraft ist kleiner als die Zugfestigkeit des Zugelements 22 im Normalzustand. Das Zugelement 22 ist jedoch so beschaffen, daß seine Zugfestigkeit unter das Maß der vom Spannarm 32 ausgeübten Zugkraft sinkt, wenn der durch die Überwachung aufzudeckende Störfall eintritt, d.h., wenn das Zugelement 22 mit der betreffenden Flüssigkeit in Berührung kommt. Im einfachsten Fall, z. B. bei der sehr häufigen Überwachung von Wasser, wässrigen Lösungen, ausströmendem Heißdampf und einigen weiteren Flüssigkeiten, kann das Zugelement ein Papierstreifen in der dem Gerät angepaßten Abmessung sein. Das Papier, etwa der Qualität von Zeitungspapier, verliert, wenn es naß wird, sofort seine Zugfestigkeit und zerreißt. Dadurch wird dem Spannarm 32 gestattet, nach oben zu schnellen, was in noch zu beschreibender Weise für die Alarmauslösung nutzbar gemacht wird.

Einer der vielen Vorteile dieses Geräts ist nun darin zu sehen, daß eine Umstellung auf spezifische Überwachungsaufgaben durch Wechsel des Zugelements 22 mit geringstem materiellen und arbeitsmäßigen Aufwand möglich ist. Es braucht hierzu nur ein anderes präpariertes Zugelement 22 eingespannt zu werden, das erst bei Einwirkung eines spezifischen Mediums zerreißt, dagegen bei anderen Flüssigkeiten keine zur Alarmauslösung ausreichende Verminderung seiner Zugfestigkeit zeigt. Zum Beispiel können hierzu Bänder aus papierähnlichem Material dienen, wobei aber statt wasserlöslicher Leime andere, lösungsmittelspezifische Bindemittel enthalten sind. Auch läßt sich durch eine geeignete Zusammensetzung und Dosierung z.B. eine verzögerte Auslösung erzielen. Darüberhinaus sind auch Materialien für das Zugelement denkbar, die bei Einwirkung der zu überwachenden Flüssigkeit nicht reißen, sondern sich nur ausreichend dehnen, oder auch sich direkt darin auflösen. Auch ist grundsätzlich die Bandform für das Zugelement nicht unbedingt erforderlich, wiewohl sie aus den schon erläuterten Gründen sehr vorteilhaft ist. Zum Beispiel ist für bestimmte Lösungsmittel auch ein einfacher Perlonfaden geeignet.

Wie schon erwähnt, dient das Nachgeben des Zugelements 22 und die hierdurch verursachte Bewegung des Spannarms 32 der Alarmauslösung. Hierzu wird irgend ein bekannter Schalter durch die Bewegung des Spannarms 32 in eine andere Betriebslage überführt. Der Begriff Schalter ist hier in seiner allgemeinsten Bedeutung zu verstehen. Er umfaßt sowohl Schalter mit mechanisch betätigten, elektrischen Berührungskontakten, also elektromechanische Schalter, wie auch berührungslos zu schaltende Schalter, z.B. einen durch Annäherung an einen Dauermagnet umschaltbaren, in Schutzgas eingeschlossenen Federkontaktarm. Grundsätzlich empfehlen sich wegen der breiteren Anwendungsmöglichkeit auch bei einem entflammbaren oder stark agressiven Medium Schalter, deren Kontakte vor der umgebenden Atmosphäre geschützt sind. Hierzu gehören auch neigungsabhängige Schalter, z.B. Quecksilberschalter, die aber die Einbaulage des Geräts festlegen. Zu den Schaltern, die die universelle Anwendbarkeit des Geräts nicht einengen, zählen auch insbesondere optoelektronische Schalter, z.B. eine durch die Spannarmauslösung unterbrechbare optische Koppelung zwischen einer Lumineszenzdiode und einer Fotodiode. Für die Zwecke der Beschreibung wird als einfaches Ausführungsbeispiel ein elektromechanischer Schalter angenommmen, der durch die auslösende Bewegung des Spannarms 32 in seine zur Alarmauslörung wirksame Lage überführt wird. Die zur Alarmauslösung wirksame Lage kann dabei wiederum die einen Stromkreis unterbrechende, wie auch die einen Stromkreis schließende Betriebslage des Schalters sein.

Ein Schalter 33 ist am Spannarm 32, z.B. mittels Anklebens, befestigt. Seine Kontaktanschlüsse sind als Lötfahnen 34 und 35 nach außen geführt. Am Schalter 33 ist auch ein Schaltarm 36 angebracht, dessen Betätigung um eine Kippachse 37 relativ zum Schalter 33 die Umschaltung von der einen in die andere Betriebslage veranlaßt. Zum Beispiel ist angenommen, daß in der in Fig. 1 dargestellten Lage des Schaltarms 36 zum Schalter 33 die Kontakte am Schalter, die zu den Lötfahnen 34 und 35 führen, elektrisch voneinander getrennt sind. Wird dagegen der Schaltarm 36 relativ zum Schalter 33 im Uhrzeigersinn der Fig. 1 um die Kippachse 37 gekippt, werden im angenommenen Fall die zu den Lötfahnen 34 und 35 führenden inneren Kontakte des Schalters 33 miteinander elektrisch verbunden. Eine solche Verschwenkung des Schaltarms 36 relativ zum Schalter 33 im Uhrzeigersinn der Fig. 1 findet dann statt, wenn der Hebel 15 sich entgegen dem Uhrzeigersinn dreht, d.h. wenn der den Schalter 33 tragende Spannarm 32 in der Ansicht der Fig. 1 nach oben geht. Dabei stößt das Ende des Schaltarms 36 gegen einen Anschlag 38, der in Form einer Schraube in einem Längsschlitz des Rahmens 11 höhenverstellbar ist, um den genauen Schaltpunkt des Schalters 33 einstellen zu lassen. Beim Absenken des Spannarms 32 wiederum schaltet eine im Schalter 33 untergebrachte, auf den Schaltarm 36 im Uhrzeigersinn der Fig. 1 wirkende Feder den Schalter 33 wieder in seine Ausgangslage um.

Von den Lötfahnen 34 und 35 des Schalters 33 führen Leitungen 39 und 40 zu einer zweipoligen Anschlußklemme 41. An sie können von außen durch eine Gummidurchführung 42 in das Innere des Geräts eingeführte Anschlußleitungen geklemmt werden, womit der Schalter 33 in einen Stromkreis einfügbar ist, der durch den Schalter geöffnet und geschlossen werden kann. Parallel zum Schalter 33 ist von der zweipoliegen Anschlußklemme 41 aus über Leitungen 43 und 44 ein Druckknopfschalter 45 gelegt, der durch Drücken eines von der Außenseite des Geräts zugänglichen Druckknopfs 46 schließbar ist. Damit läßt sich bei bereits eingelegtem Zugelement 22 und endgültig fertiggesteller Installation der Alarmfall ohne Zerreißen oder Wiederherausnehmen des Zugelements 22 simulieren. Das Drücken des Druckknopfs 46 bewirkt dabei in der angeschlossenen Alarmanlage die gleichen Funktionen wie das Schließen des Schalters 33 im Ernstfall. Damit ist eine zuverlässige Erprobung möglich. Im angenommenen Beispiel ist der Druckknopfschalter 45

parallel zum Schalter 33 gelegt, weil als zur Alarmauslösung wirksame Lage des Schalters 33 dessen geschlossene Lage angenommen wurde. Wird dagegen angenommen, daß der Schalter 33 im Alarmfall den durch ihn führenden Stromkreis unterbrechen soll, ist als Druckknopfschalter 45 ein in seiner Ruhelage geschlossener, durch Knopfdruck öffenbarer Schalter vorzusehen, der dann in Reihe mit dem Schalter 33 zu legen ist. Damit läßt sich ebenfalls ohne Veränderung an der endgültig installierten Anlage der Alarmfall simulieren.

Das beschriebene Überwachungsgerät 1o läßt sich wegen der außen liegenden Führung für das Zugelement auch bei aufgesetzter Abdeckhaube ohne Eingriff in das Gerät in der schon beschriebenen Weise durch Einspannen des Zugelements 22 in den betriebsbereiten Zustand überführen. Es läßt sich so anbringen, daß die zwischen den Stegen 26 verlaufende Strecke des Zugelements 22 eine beliebige Höhenlage über einer Boden- oder Wandfläche einnimmt. Es läßt sich auch unmittelbar auf den Boden oder die Wand aufsetzen, so daß der zwischen den Stegen 26 verlaufende Teil des Zugelements 22 die Wand oder den Boden direkt berührt. Bei nicht völlig ebenen Flächen läßt sich eine bestmögliche Annäherung mittels Verstellung von justierbaren Füßchen 47 erzielen. Die Stege 26 halten das Zugelement 22 im Abstand von der Unterseite der Bodenplatte 29, so daß selbst bei direkter Auflage auf einer Boden- oder Wandfläche das Zerreißen des Zugelements 22 im Alarmfall nicht behindert ist. Damit ist das Gerät, bei einfachster Bauart, in der Lage, einen Flüssigkeitsaustritt bereits dann zu melden, wenn er nur zur Benetzung der Wand- oder Bodenfläche geführt hat. Dies ist ein bedeutender Vorteil gegenüber den allenfalls bezüglich der Einfachheit mit der Erfindung vergleichbaren Schwimmergeräten. Ein weiterer Vorteil gegenüber diesen besteht, auch bei höheren zu meldenden Pegeln, z.B. zur Niveaueinstellung beim Füllen eines Behälter, darin, daß nicht der steigende Pegel der Flüssigkeit die zur Auslösung notwendige Energie liefern muß. Diese Energie ist vielmehr bereits in der gespannten Feder 16 gespeichert, so daß das Gerät sehr viel empfindlicher auf einen Zuwachs der Pegelhöhe ansprechen kann. Dies erlaubt eine vielfach gesteigerte
Genauigkeit und Sicherheit bei der Niveaueinstellung. Die Sicherheit ergibt sich bei Anwendungsfällen, bei denen es auf .
eine Langzeitbereitschaft ankommt, außerdem dadurch, daß keine
alterungsanfälligen Teile vorhanden sind. Das Zugelement 22
ist schon im einfachsten Falle eines Papierbandes dauerhaft
betriebsbereit und wird auch nach Jahren noch bei Nässe reißen.
Es ist lediglich dafür zu sorgen, daß die Schaltkontakte nicht
verschmutzen, was bei deren geschützter Unterbringung ohne
weiteres möglich ist. Schließlich kommt es nur noch auf die Dauerbeweglichkeit des Hebels 15 zur Achse 14 an. Auch hierfür gibt es
bewährte Lösungen einfachster Bauart, z.B. eine mit ausreichendem Spiel gefertigte Lagerung. Der lange Spannarm 32 im beschriebenen Ausführungsbeispiel erlaubt außerdem eine schonende Beanspruchung des Zugelements 22 bei kräftiger Feder 16, so
daß eine sichere Auslösungsmöglichkeit ohne Gefahr von Fehlaullösung durch Überbeanspruchung des Zugelements 22 gegeben ist.

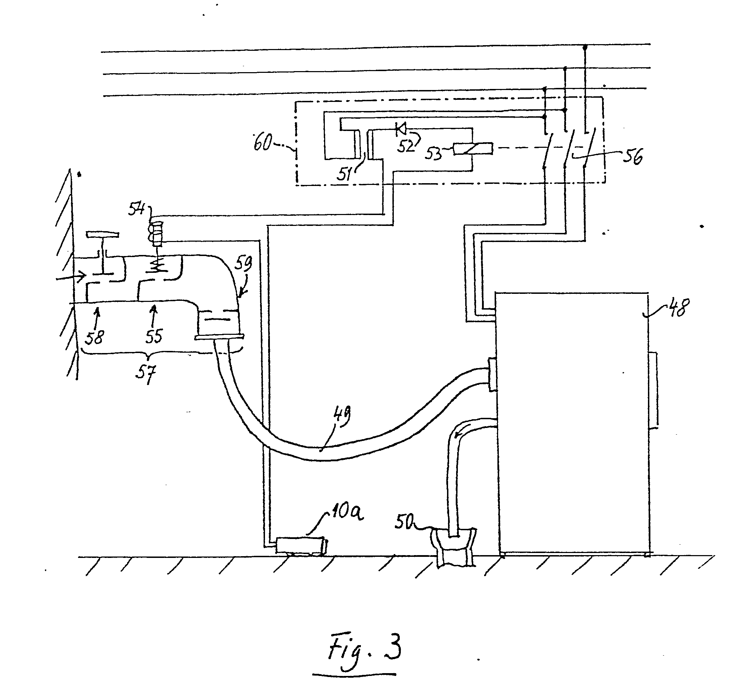

Das erfindungsgemäße Gerät dient der Alarmauslösung bei Anwesenheit einer Flüssigkeit an einer zu überwachenden Stelle. Dabei
ist unter Alarm nicht nur der Fall zu verstehen, bei dem ein optisches, akustisches oder sonstwie wahrnehmbares Signal an Bedienungspersonal weitergegeben wird. Unter Alarm soll hier auch
der Fall verstanden werden, bei dem eine selbsttätige Stillsetzung
oder sonstige Sicherung der zu überwachenden Anlage im Störfall
vorgenommen wird. Ein vorteilhaftes Anwendungsbeispiel dieser
Art ist in Fig. 3 dargestellt. Ein mit elektrischem Strom und
über einen flexiblen Schlauch mit Druckwasser zu versorgendes
Gerät, z.B. ein Waschautomat 48, soll während des Betriebs überwacht werden. Es soll vor allem das Platzen des Schlauchs 49,
über den das Gerät 48 mit Druckwasser versorgt wird, und ein
Austreten von Abwasser aus dem Abfluß 5o zur Unterbindung der
Wasserzufuhr, aber auch zur Stillsetzung des Waschautomaten
führen, der ohne Wasser nicht arbeiten kann. Hierzu befindet sich ein Überwachungsgerät 1oa der in den Fig. 1 und 2 dargestellten Art am Boden an einer bei Wasseraustritt mit Sicherheit naß werdenden Stelle. Das Überwachungsgerät 1oa unterscheidet sich von dem vorhergehend beschriebenen Überwachungsgerät 1o nur dadurch, daß es in der zur Alarmauslösung wirksamen Lage seines Schalters den Stromkreis, in den es geschaltet ist, nicht schließt, sondern unterbricht.

Der Stromkreis, in den das Überwachungsgerät 1oa eingeschaltet ist, kann aus der Sekundärwicklung eines Transformators 51, aus einem Gleichrichter 52, einer Relaiswicklung 53 und der Magnetwicklung 54 eines Magnetventils 55 bestehen. Das Relais 53 schließt die Kontakte 56 für die Stromversorgung des Geräts 48, wenn es erregt ist. Bei fehlender Erregung sind die Kontakte 56 offen. Das Magnetventil 55 gibt den Wasserdurchfluß frei, wenn die Wicklung 54 erregt ist, und sperrt den Wasserdurchfluß, wenn die Wicklung 54 entregt ist. Das Magnetventeil 55 ist Bestandteil einer Armatur 57, die neben dem Magnetventil noch einen von Hand betätigbaren Absperrhahn 58 und eine Rücklaufsicherung 59 zwecks Verhinderung des Rücksaugens von gebrauchtem Wasser in das Versorgungsnetz enhält. Die Zusammenfassung dieser drei Bestandteile in einer Armatur erleichtert das richtige Installieren der Anlage ebenso wie die Zusammenfassung der Schwachstromversorgung 51, 52 für das Gerät 1oa mit der Starkstromabschaltung 53, 56 in einem einzigen Anschlußgerät 6o.

-------------------

Patentansprüche:

1. Überwachungsgerät mit einem Schalter zur Alarmauslösung bei Anwesenheit einer Flüssigkeit an einer zu überwachenden Stelle, g e k e n n z e i c h n e t durch ein den Schalter (33) von der Überführung in seine zur Alarmauslösung wirksame Lage zurückhaltendes, bei Anwesenheit der betreffenden Flüssigkeit nachgebendes Zugelement (22).

2. Überwachungsgerät nach Patentanspruch 1, g e k e n n - z e i c h n e t durch ein bei Anwesenheit der betreffenden Flüssigkeit zerreißbares Zugelement (22).

3. Überwachungsgerät nach Patentanspruch 1, g e k e n n - z e i c h n e t durch ein bei Anwesenheit der betreffenden Flüssigkeit dehnbares Zugelement (22).

4. Überwachungsgerät nach Patentanspruch 1, g e k e n n - z e i c h n e t durch ein bei Anwesenheit der betreffenden Flüssigkeit sich auflösendes Zugelement (22).

5. Überwachungsgerät nach einem der vorhergehenden Patentansprüche, g e k e n n z e i c h n e t durch einen vorbelasteten Spannarm (32), durch den das Zugelement (22) mit einer Kraft spannbar ist, die kleiner als die Zugfestigkeit des Zugelements (22) bei Abwesenheit der betreffenden Flüssigkeit, jedoch größer als die Zugfestigkeit des Zugelements (22) bei Anwesenheit der betreffenden Flüssigkeit ist, und daß der Spannarm (32) seinerseits vom gespannten Zugelement (22) an der Überführung in die Lage zurückgehalten wird, in der der mit dem Spannarm (32) in Wirkverbindung stehende Schalter (33) zur Alarmauslösung wirksam wird.

6. Überwachungsgerät nach einem der vorhergehenden Patentansprüche, mit einem Gehäuse, dadurch g e k e n n - z e i c h n e t, daß das Zugelement (22) außerhalb der Gehäuseaußenfläche spannbar ist und zwischen einer zum Gerät (10) feststehenden und einer zum Gerät (10) beweglichen Stelle (27, 30 bzw. 20, 21) einspannbar ist.

7. Überwachungsgerät nach einem der vorhergehenden Patentansprüche, dadurch g e k e n n z e i c h n e t , daß das Zugelement (22) ein Band ist.

8. Überwachungsgerät nach Patentanspruch 7, dadurch g e - k e n n z e i c h n e t , daß das Band an seinen beiden Enden durch je einen Stift (21, 27) am Gerät (10) einspannbar ist.

9. Überwachungsgerät nach Patentanspruch 7 oder 8, dadurch g e k e n n z e i c h n e t , daß das Band aus Papier besteht.

10. Überwachungsgerät nach einem der Patentansprüche 6 bis 9, dadurch g e k e n n z e i c h n e t , daß das Zugelement (22) zwischen der zum Gerät (10) feststehenden und der zum Gerät (10) beweglichen Einspannstelle (27, 30 bzw. 20, 21) über eine Umlenkstelle (25) geführt ist und eine horizontale und vertikale Berührungsfläche bildet.

11. Überwachungsgerät nach Anspruch 10, dadurch g e k e n n - z e i c h n e t , daß das Zugelement (22) zwischen der zum Gerät (10) feststehenden Einspannstelle (27, 30) und der Umlenkstelle (25) entlang einer Aufsetzfläche des Geräts (10) verläuft, an der sich Stege (26) befinden, die das Zugelement (22) im Abstand von der Aufsetzfläche des Geräts (10 halten.

12. Überwachungsgerät nach einem der Patentansprüche 5 bis 11, dadurch g e k e n n z e i c h n e t , daß der Spannarm (32) ein schwenkbar gelagerter Hebel ist, an dessen Ende sich eine Einspannstelle (20, 21) für das Zugelement (22) befindet und der durch eine am Hebel (15) angreifende Zugfeder (16) vorbelastet ist.

13. Überwachungsgerät nach Patentanspruch 12, dadurch g e k e n n z e i c h n e t , daß die Zugfeder (16) an einer Stelle am Hebel (15) angreift, die einen kleineren Abstand zur Schwenkachse (14) des Hebels (15) hat als die Einspannstelle (20, 21) für das Zugelement (22).

14. Überwachungsgerät nach einem der vorhergehenden Patentansprüche, g e k e n n z e i c h n e t durch einen weiteren, willkürlich betätigbaren Schalter (45) am Gerät (10), durch den der Schaltzustand zur Alarmauslösung auch bei gespanntem Zugelement (22) herstellbar ist.

15. Überwachungsgerät nach einem der vorhergehenden Patentansprüche, dadurch g e k e n n z e i c h n e t , daß ein Zugelement Verwendung findet, das bereits bei Anwesenheit von Dämpfen der betreffenden Flüssigkeit nachgibt.

16. Überwachungsgerät nach einem der vorhergehenden Patentansprüche, g e k e n n z e i c h n e t durch die Anordnung seines Schalters (33) in einem sowohl die Strom- als auch die Druckwasserversorgung eines zu überwachenden Geräts (48) aufrecht erhaltenden Schaltkreis (51, 52, 53, 54) so, daß in der zur Alarmauslösung wirksamen Lage sowohl die Strom- als auch die Druckwasserversorgung des zu überwachenden Geräts (48) unterbrochen ist.

Fig.1

0009651

Fig. 2

Fig. 3

**EUROPÄISCHER RECHERCHENBERICHT**

0009651

Nummer der Anmeldung

EP 79 10 3311

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | DE - A - 1 524 680 (H. SCHLENKER) <br> * Ansprüche; Figuren 1-4 * | 1,2,5-7,9,12,14,16 | G 01 M 3/16 <br> D 06 F 39/08 <br> H 01 H 35/42 |
| | -- | | |
| X | DE - C - 693 639 (W. PLAGWITZ et al.) <br> * Ansprüche; Figuren 1-3 * | 1,2,5,7,9,14,15 | |
| | -- | | |
| X | US - A - 4 001 531 (J.R. CROCKETT SR.) <br> * Zusammenfassung; Figuren 3,4 * | 1,4-6,14 | RECHERCHIERTE SACHGEBIETE (Int. Cl. 3) |
| | -- | | G 01 M 3/04 <br> 3/16 <br> 3/18 <br> 3/40 |
| X | NL - A - 267 453 (H. JUNG & CO. CAROLINENHÜTTE GmbH) <br> * Ansprüche; Figur 5 * | 1,4,5,12,14 | F 17 D 5/06 <br> D 06 F 39/08 <br> G 01 F 23/22 <br> 23/00 |
| | -- | | H 01 H 35/42 <br> G 08 B 21/00 |
| X | DE - A - 1 650 076 (W. KRUCK) <br> * Seiten 2,3; Figur * | 1,2,5-7,9,12,14 | |
| | -- | | |
| | DE - C - 580 996 (ALLGEMEINE ELEKTRICITÄTSGESELLSCHAFT) <br> * Insgesamt; Figur 2 * | 1,3,5 | KATEGORIE DER GENANNTEN DOKUMENTE |
| | -- | | X: von besonderer Bedeutung <br> A: technologischer Hintergrund <br> O: nichtschriftliche Offenbarung <br> P: Zwischenliteratur |
| | DE - A - 2 159 239 (E. DIETERICH) <br> * Ansprüche; Figur * | 1,4 | T: der Erfindung zugrunde liegende Theorien oder Grundsätze |
| | -- | | E: kollidierende Anmeldung <br> D: in der Anmeldung angeführtes Dokument |
| | DE - A - 2 504 142 (HUSQVARNA AB.) <br> * Ansprüche; Figuren 2,3 * | 1,4 | E: aus anderen Gründen angeführtes Dokument |
| | -- | | &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 17-12-1979 | VAN ASSCHE |

EPA form 1503.1 06.78

| Europäisches Patentamt | EUROPÄISCHER RECHERCHENBERICHT |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 200 388 (M.R. UHLIG) <br> * Spalte 2, Zeilen 18-38; Figuren 1,3 * <br><br> -- | 1,4 |
| | CH - A - 411 633 (H. KUGLER) <br> * Ansprüche; Figur 1 * <br><br> -- | 1,4 |
| | ELEKTROMARKT, Band 51, Nr. 5, 14. Mai 1969, Seite 27 <br> Würzburg, DE. <br> "Wenn die Waschmaschine leckt - Eine neue Erfindung verhindert Überschwemmungen im Haushalt" <br><br> * Seite 27 * <br><br> ---- | 1,16 |

**KLASSIFIKATION DER ANMELDUNG (Int.Cl. 3)**

**RECHERCHIERTE SACHGEBIETE (Int. Cl. 3)**

EPA Form 1503.2 06.78